# EUROPEAN PATENT APPLICATION

(11) **EP 4 579 707 A1**
(43) Date of publication of application: **02.07.2025**
(21) Application number: 24201241.7
(22) Date of filing: 19.09.2024
(51) Int. Cl.: H01H 1/38, H01H 33/12, H01H 33/666, H01H 33/56

(54) **VACUUM PARALLEL SWITCH DEVICE**

(30) Priority: 28.12.2023 CN 202311834946
(71) Applicant: Henan Pinggao Electric Co., Ltd, Pingdingshan, Henan 467001 (CN); Shanghai Pinggao Tianling Switchgear Co., Ltd., Shanghai 201808 (CN); China Electrical Equipment Group Co., Ltd., Shanghai 200040 (CN)
(72) Inventor: Zhu, Yanqing, Pingdingshan, Henan, 467001 (CN); Zhu, Zhihao, Pingdingshan, Henan, 467001 (CN); Lou, Yuantong, Pingdingshan, Henan, 467001 (CN); Wang, Haiyan, Pingdingshan, Henan, 467001 (CN); Zhang, Hao, Pingdingshan, Henan, 467001 (CN); Fei, Xiang, Pingdingshan, Henan, 467001 (CN); Sun, Henan, Pingdingshan, Henan, 467001 (CN); Zhai, Tingting, Pingdingshan, Henan, 467001 (CN); Liu, Zhiyang, Pingdingshan, Henan, 467001 (CN); Zhang, Jiafei, Jiading District, Shanghai, 210808 (CN); Li, Hongwei, Jiading District, Shanghai, 201808 (CN); Qian, Lixiao, Jiading District, Shanghai, 201808 (CN); Cao, Yefei, Jiading District, Shanghai, 201808 (CN)
(74) Representative: Gulde & Partner

(57) **Abstract**

The present invention discloses a vacuum parallel switch device, including: a main electrically-conductive loop, including an incoming line terminal bus, a bus connected to the incoming line terminal bus, a fixed isolating contact connected to an end of the bus, and a moving isolating contact assembly mating with the fixed isolating contact; and a vacuum parallel loop, including the incoming line terminal bus, the bus connected to the incoming line terminal bus, and a parallel vacuum arc-extinguishing chamber connected to an other end of the bus, where a rotating conductor assembly is connected to a moving end of the parallel vacuum arc-extinguishing chamber through a flexible connection, the rotating conductor assembly is connected to a lead-out conductor of the moving isolating contact assembly, and the moving end of the parallel vacuum arc-extinguishing chamber is driven through an insulating rotating member to implement opening or closing.

## Description

### TECHNICAL FIELD

The present invention relates to the technical field of power supply and distribution and medium-voltage complete electrical appliances, and in particular, to a vacuum parallel switch device.

### BACKGROUND

A current ring main unit mainly adopts an SF₆ gas as an insulating medium. The SF₆ gas has favorable insulating performance. Therefore, the SF₆ ring main unit has good electrical reliability. However, the SF₆ is a greenhouse gas. Currently, various companies are trying to replace the SF₆ with environmentally-friendly gases such as dry air and nitrogen. The environmentally-friendly ring main unit replacing an SF₆ gas-filled ring main unit is to become the mainstream of the market.

However, since breaking performance of various environmentally-friendly gases is much lower than that of the SF₆, for a load switch cabinet, a vacuum arc-extinguishing chamber is usually used to implement the breaking function, and the environmentally-friendly gas is used to implement an insulation function, that is, a solution of connecting the vacuum arc-extinguishing chamber in series or in parallel with a three-position switch by using a technical route of environmentally-friendly gas insulation + vacuum opening/closing unit. The series connection solution has a higher cost due to the additional vacuum arc-extinguishing chamber.

Therefore, a parallel connection solution is used for parts in the prior art. In an existing vacuum parallel connection solution, an isolating switch is subjected to dynamic heat, closing, and operating load currents, and the arc-extinguishing chamber only breaks the load current in a very short time. Therefore, the solution may achieve a very small volume, a very low price, and a very favorable market prospect.

Currently, a typical structure of a vacuum parallel breaking structure is a rotary isolating switch with a vacuum arc-extinguishing chamber, but such a structure leads to an undesirable electric field, and is usually used in a 12 kV environmentally-friendly ring main unit. For an environmentally-friendly ring main unit at a voltage level of 24 kV and a higher voltage level, a risk of weak insulation and easy breakdown exists.

The present invention is a further optimization and improvement on the vacuum parallel connection solution.

### SUMMARY

To overcome the foregoing defects of the prior art, an objective of the present invention is to provide a vacuum parallel switch device. The vacuum parallel switch device is used in combination with a fast direct-acting isolating switch or a three-position switch, and includes a direct-acting isolating switch and a parallel vacuum arc-extinguishing chamber. A fixed isolating contact and a vacuum arc-extinguishing chamber are fixed to an insulating support, and a moving isolating contact achieves all functions of a vacuum parallel switch in an opening and closing process with a linear motion.

To achieve the objective of the present invention, the technical solution is as follows.

A vacuum parallel switch device, including:
a main electrically-conductive loop, including an incoming line terminal bus, a bus connected to the incoming line terminal bus, a fixed isolating contact connected to an end of the bus, and a moving isolating contact assembly mating with the fixed isolating contact; and
a vacuum parallel loop, including the incoming line terminal bus, the bus connected to the incoming line terminal bus, and a parallel vacuum arc-extinguishing chamber connected to an other end of the bus, where a rotating conductor assembly is connected to a moving end of the parallel vacuum arc-extinguishing chamber through a flexible connection, and the moving end of the parallel vacuum arc-extinguishing chamber is connected to a lead-out conductor of the moving isolating contact assembly through the rotating conductor assembly;
the incoming line terminal bus, the bus, the fixed isolating contact, and the parallel vacuum arc-extinguishing chamber are all assembled on an insulating support member; and
two ends of a rotating support shaft are fixed to two side plates of the insulating support member, an insulating rotating member and the rotating conductor assembly are both supported by and rotatable around the rotating support shaft, and the insulating rotating member, the rotating support shaft, and the moving end of the parallel vacuum arc-extinguishing chamber cooperate by way of cam transmission. The insulating rotating member drives the moving end of the parallel vacuum arc-extinguishing chamber to implement opening or closing.

In a preferred embodiment of the present invention, the rotating conductor assembly integrally rotates counterclockwise around the rotating support shaft.

In a preferred embodiment of the present invention, a cam groove of the insulating rotating member, the rotating support shaft, and the moving end of the parallel vacuum arc-extinguishing chamber cooperate by way of cam transmission. The insulating rotating member drives the moving end of the parallel vacuum arc-extinguishing chamber to implement opening or closing.

In a preferred embodiment of the present invention, a front half of a cam groove is an unequal-diameter curved groove, and a rear half is an equal-arc groove.

In a preferred embodiment of the present invention, the rotating conductor assembly includes a first rotating conductor and a second rotating conductor, and the first rotating conductor and the second rotating conductor rotate relative to each other around an internal first pin shaft and are limited by a torsion spring.

In a preferred embodiment of the present invention, a limiting pin shaft is arranged in a clockwise direction of the first rotating conductor.

In a preferred embodiment of the present invention, the moving isolating contact assembly includes a conductive rod, an end portion of the conductive rod is provided with a shield, an insulating push-pull member is arranged below the shield, and the lead-out conductor is arranged below the insulating push-pull member.

In a preferred embodiment of the present invention, the insulating push-pull member includes a first boss structure located at an upper end and a second boss structure located at a lower end, and the two boss structures are staggered with respect to each other in space and correspond to a first rotating portion and a second rotating portion of the insulating rotating member respectively.

Beneficial effects of the present invention are as follows.

The present invention may be used in combination with a fast direct-acting isolating switch or a three-position switch. According to the present invention, the moving isolating contact achieves all functions of a vacuum parallel switch in an opening and closing process with a linear motion. The present invention has favorable insulating performance and has a simple and compact structure.

### BRIEF DESCRIPTION OF THE DRAWINGS

FIG. 1 is a cross-sectional view of a structure of a vacuum parallel switch device.

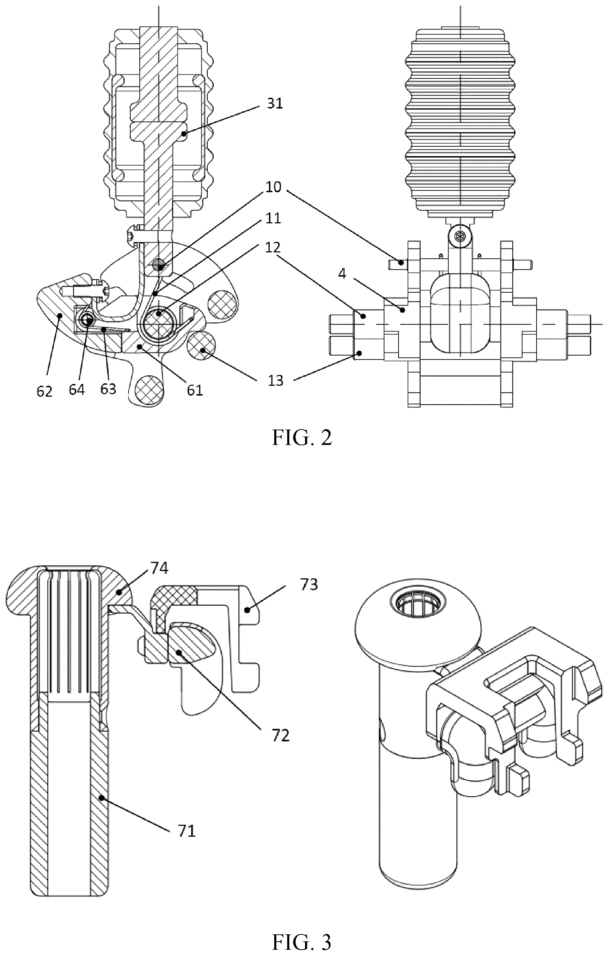

FIG. 2 is a structural diagram of parts of a vacuum parallel loop.
FIG. 3 is structural diagram of a moving isolating contact assembly.

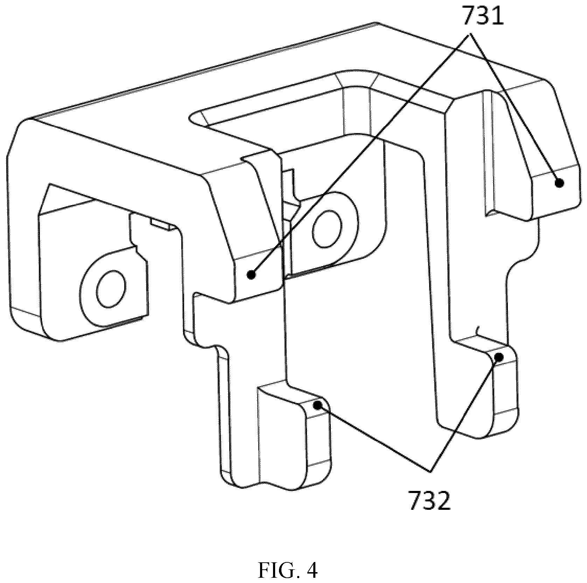

FIG. 4 is structural diagram of an insulating push-pull member.

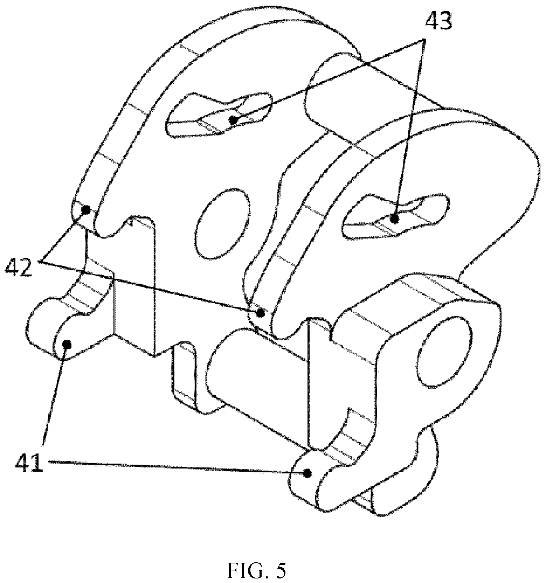

FIG. 5 is a structural diagram of an insulating rotating member.

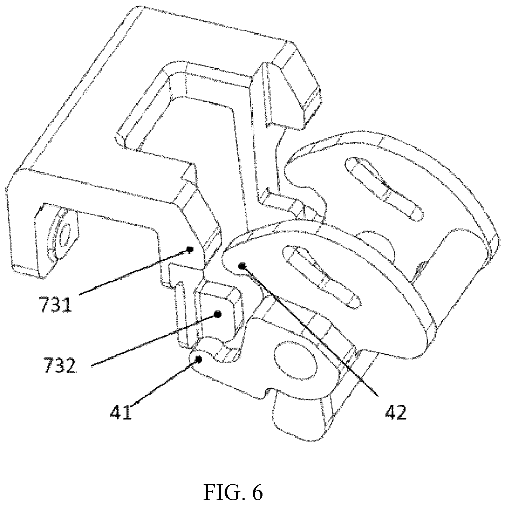

FIG. 6 is a schematic diagram of action cooperation between an insulating push-pull member and an insulating rotating member.
FIG. 7 is a schematic diagram of cooperation between an insulating rotating member and a moving end of an arc-extinguishing chamber.
FIG. 8 to FIG. 11 are schematic diagrams of a breaking process of a parallel vacuum arc-extinguishing chamber in an opening process of an isolating switch.
FIG. 12 to FIG. 15 are schematic diagrams of a breaking process of a parallel vacuum arc-extinguishing chamber in a closing process of an isolating switch.

### DETAILED DESCRIPTION

In order to make the objectives, technical solutions, and advantages of the invention clearer and more comprehensible, the invention is further described in detail in combination with the drawings and embodiments. However, it should be understood that the specific embodiments described herein serve to explain the invention merely and are not used to limit the invention. In addition, the description of common structure and technology are omitted herein, to avoid unnecessary concepts to confuse the invention.

In the description of the present invention, it should be noted that the orientation or position relation indicated by the terms "above", "below", "inside", "outside", "top/bottom end" are based on the orientation or position relation indicated on drawings, which are merely used for convenience and simplicity of description of the present invention, rather than indicating or implying that the referred device or component should necessarily have a specific orientation, construct and operate in a specific orientation. Therefore, the terms cannot be understood as a limitation on the present invention. In addition, the terms "first" and "second" are only used to describe the objective, and cannot be understood as indicating or implying relatively significance.

Reference numerals in the figures of the present invention are as follows.

1. Incoming line terminal bus; 2. Bus; 3. Parallel vacuum arc-extinguishing chamber; 4. Insulating rotating member; 5. Flexible connection; 6. Rotating conductor assembly; 7. Moving isolating contact assembly; 8. Fixed isolating contact; 9. Insulating support member; 10. Pin shaft; 11. Torsion spring; 12. Rotating support shaft; 13. Limiting pin shaft; 31. Moving end; 41. Second rotating portion; 42. First rotating portion; 43. Cam groove; 61. First rotating conductor; 62. Second rotating conductor; 63. Reset torsion spring; 64. First pin shaft; 71. Conductive rod; 72. Lead-out conductor; 73. Insulating push-pull member; 731. First boss structure; 732. Second boss structure; 74. Shield.

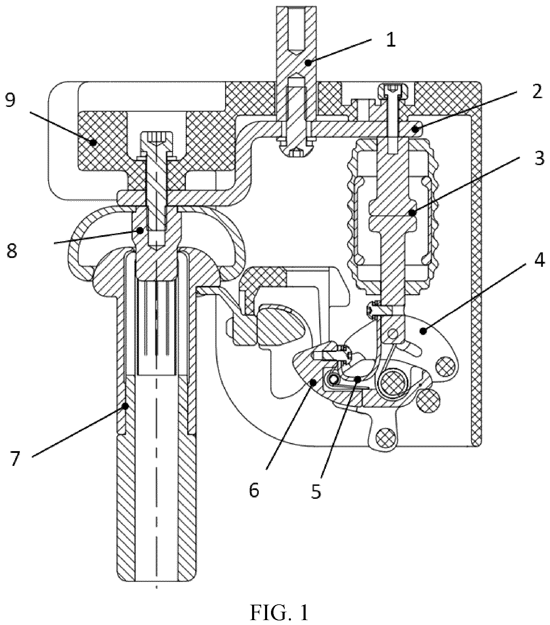

A vacuum parallel switch device shown in FIG. 1 includes a main electrically-conductive loop. The main electrically-conductive loop includes an incoming line terminal bus 1, a bus 2 connected to the incoming line terminal bus 1, a fixed isolating contact 8 connected to an end of the bus 2, and a moving isolating contact assembly 7 mating with the fixed isolating contact 8.

A vacuum parallel loop includes the incoming line terminal bus 1, the bus 2 connected to the incoming line terminal bus 1, and a parallel vacuum arc-extinguishing chamber 3 connected to an other end of the bus 2. A rotating conductor assembly 6 is connected to a moving end 31 of the parallel vacuum arc-extinguishing chamber 3 through a flexible connection 5, and the moving end 31 of the parallel vacuum arc-extinguishing chamber 3 is connected to a lead-out conductor 72 of the moving isolating contact assembly 7 through the rotating conductor assembly 6.

The incoming line terminal bus 1, the bus 2, the fixed isolating contact 8, and the parallel vacuum arc-extinguishing chamber 3 are all assembled on an insulating support member 9.

Two ends of a rotating support shaft 12 are fixed to two side plates of the insulating support member 9, an insulating rotating member 4 and the rotating conductor assembly 6 are both supported by and rotatable around the rotating support shaft 12, and the insulating rotating member 4, the rotating support shaft 12, and the moving end 31 of the parallel vacuum arc-extinguishing chamber 3 cooperate by way of cam transmission. The insulating rotating member 4 drives the moving end 31 of the parallel vacuum arc-extinguishing chamber 3 to implement opening or closing.

Specifically, a cam groove 43 of the insulating rotating member 4, the rotating support shaft 12, and the moving end 31 of the parallel vacuum arc-extinguishing chamber 3 cooperate by way of cam transmission. The insulating rotating member 4 drives the moving end 31 of the parallel vacuum arc-extinguishing chamber 3 to implement opening or closing.

A pin shaft 10 extends through a hole of the moving end 31 of the parallel vacuum arc-extinguishing chamber 3, and extends through the cam groove 43 of the insulating rotating member 4, to form a higher pair with the cam groove 43.

A front half of the cam groove 43 is an unequal-diameter curved groove, and a rear half is an equal-arc groove.

The front half of the cam groove 43 is an unequal-diameter curved groove, and the insulating rotating member 4 drives opening/closing of a moving end 31 of a parallel vacuum arc-extinguishing chamber 3 during rotation. The rear half of the cam groove 43 is the equal-arc groove, and the insulating rotating member 4 drives the moving end 31 of the parallel vacuum arc-extinguishing chamber 3 to keep open during rotation.

The rotating support shaft 12 of the insulating rotating member 4 is located directly below the parallel vacuum arc-extinguishing chamber 3. Therefore, in an equal-arc section, the moving end 31 of the parallel vacuum arc-extinguishing chamber 3 is located at a dead point of transmission and is locked, to ensure that the moving end 31 is always at an opening position.

The rotating conductor assembly 6 integrally rotates counterclockwise around the rotating support shaft 12. Specifically, the rotating conductor assembly 6 includes a first rotating conductor 61 and a second rotating conductor 62, and the first rotating conductor 61 and the second rotating conductor 62 rotate relative to each other around an internal first pin shaft 64 and are limited by a reset torsion spring 63.

In addition, a limiting pin shaft 13 is arranged in a clockwise direction of the first rotating conductor 61.

Under the action of the reset torsion spring 63, the state shown in the figure is always maintained. Affected by a structure, the second rotating conductor 62 may rotate clockwise around the first pin shaft 64 relative to the first rotating conductor 61, but cannot rotate countercl ockwi se.

As a whole, the rotating conductor assembly 6 may rotate counterclockwise around the rotating support shaft 12, but the first rotating conductor 61 cannot rotate clockwise in the state shown in the figure due to being limited by the limiting pin shaft 13.

Under the action of a torsion spring 11, the rotating conductor assembly 6 maintains the state shown in the figure.

When the moving contact moves downward, the second rotating conductor 62 is subjected to a downward force, and the rotating conductor assembly 6 entirely rotates counterclockwise around the rotating support shaft 12.

When the moving contact moves upward, the second rotating conductor 62 is subjected to an upward force. Since the first rotating conductor 61 is limited by the limiting pin shaft 13, the second rotating conductor 62 is to rotate around the first pin shaft 64.

The moving isolating contact assembly 7 includes a conductive rod 71, an end portion of the conductive rod 71 is provided with a shield 74, an insulating push-pull member 73 is arranged below the shield 74, and the lead-out conductor 72 is arranged below the insulating push-pull member 73.

The insulating push-pull member 73 includes a first boss structure 731 located at an upper end and a second boss structure 732 located at a lower end, and the two boss structures are staggered with respect to each other in space and correspond to a first rotating portion 42 and a second rotating portion 41 of the insulating rotating member 4 respectively.

When the insulating push-pull member 73 moves downward with the moving contact, the first boss structure 731 pushes the second rotating portion 41 of the insulating rotating member 4 downward, to drive the insulating rotating member 4 to rotate counterclockwise.

When the insulating push-pull member 73 moves upward with the moving contact, the second boss structure 732 pulls the first rotating portion 42 of the insulating rotating member 4 upward, to drive the insulating rotating member 4 to rotate clockwise. The two mating structures are staggered with respect to each other to avoid mutual interference during the opening/closing.

### Opening process:

A state shown in FIG. 1 is a closed state of an isolating switch. The lead-out conductor 72 does not contact the second rotating conductor 62. Therefore, the vacuum parallel loop is not connected. A current flows through an isolating contact.

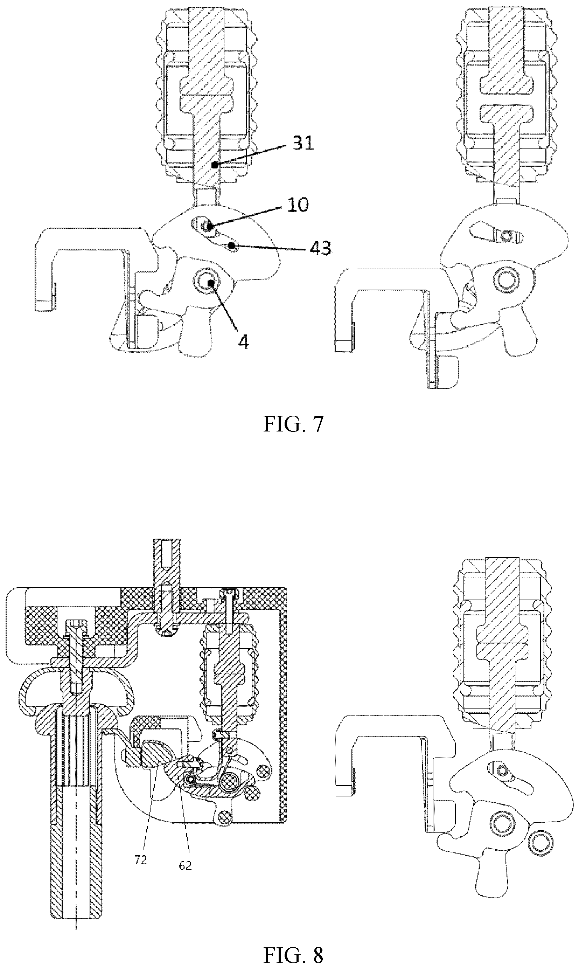

When the isolating switch starts to open, the moving contact starts to move downward. When the moving contact moves a specific distance (FIG. 8), the lead-out conductor 72 starts to contact the second rotating conductor 62. In this case, the vacuum parallel loop is turned on, and the moving isolating contact still maintains contact with the fixed isolating contact. Then a part of the current flowing in from the incoming line terminal bus 1 is transferred to the vacuum parallel loop.

The moving contact continues to move downward, the moving isolating contact is separated from the fixed isolating contact, the current is completely transferred to the vacuum parallel loop, and the second rotating conductor 62 starts to rotate counterclockwise under the push of the lead-out conductor 72.

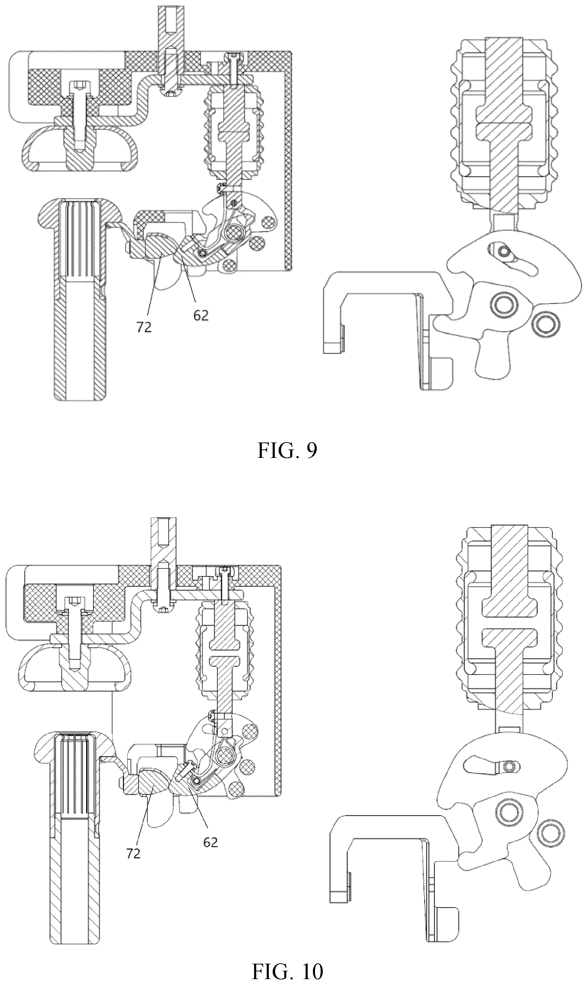

The moving contact continues to move downward, and when a main isolating clearance distance is sufficient to withstand a recovery voltage for breaking, the insulating push-pull member 73 starts to contact the insulating rotating member 4, as shown in FIG. 9.

In FIG. 9, before the insulating push-pull member 73 is just contacting the insulating rotating member 4, the insulating push-pull member 73 does not contact the insulating rotating member 4, the insulating rotating member remains stationary, and the parallel vacuum arc-extinguishing chamber 3 always remains closed.

Subsequently, the moving contact continues to move downward, and the first boss structure 731 of the insulating push-pull member 73 starts to mate with the second rotating portion 41 of the insulating rotating member 4 to push the insulating rotating member 4 to rotate. Correspondingly, the cam groove 43 on the insulating rotating member 4 drives the conductive rod 71 of the parallel vacuum arc-extinguishing chamber 3 to move through the pin shaft 10, to implement the opening of the parallel vacuum arc-extinguishing chamber 3. When the insulating push-pull member 73 is out of contact with the insulating rotating member 4, the pin shaft 10 is located in an equal-arc section of the cam groove 43, so that an opening state is always maintained, as shown in FIG. 10.

### Closing process:

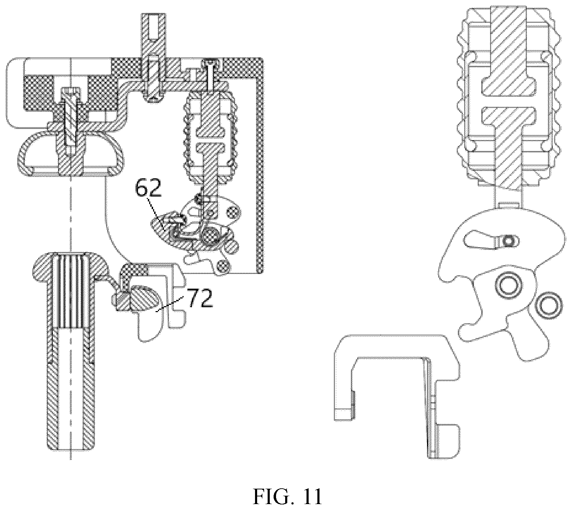

FIG. 11 shows an open state of the isolating switch and an open state of the parallel vacuum arc-extinguishing chamber 3. During the closing, a moving isolating contact moves upward.

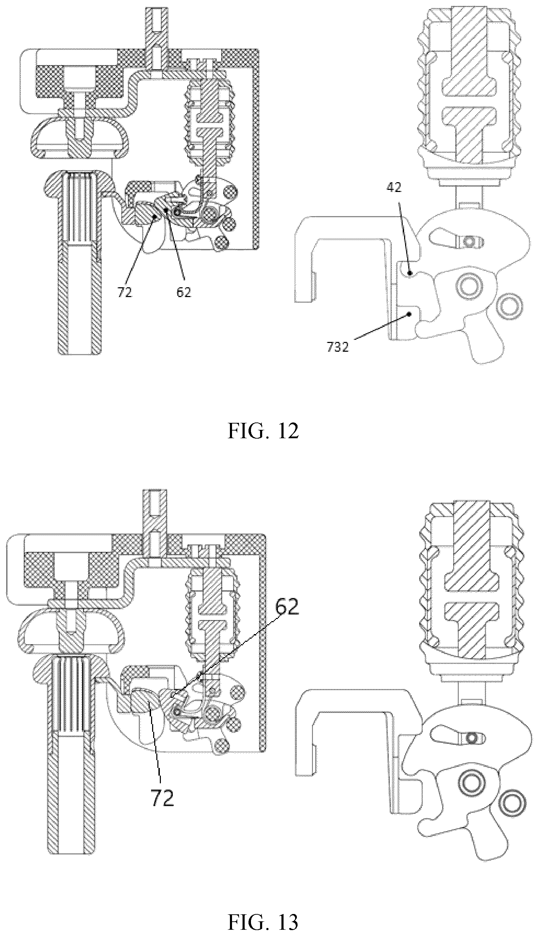

The isolating switch starts to move upward and closes, the moving contact starts to move upward, and a lead-out conductor 72 starts to contact a second rotating conductor 62 when the moving contact moves a specific distance (FIG. 11 and FIG. 12).

The second boss structure 732 of the insulating push-pull member 73 does not contact the first rotating portion 42 of the insulating rotating member 4, the insulating rotating member 4 remains stationary, and the parallel vacuum arc-extinguishing chamber 3 remains open.

The moving contact continues to move upward, and the second rotating conductor 62 starts to rotate counterclockwise around the first pin shaft 64 under the push of the lead-out conductor 72, as shown in FIG. 13. When a distance between isolating clearances is small enough, an arc channel is formed at the isolating clearance, and a current starts to flow.

The second boss structure 732 of the insulating push-pull member 73 is about to contact the first rotating portion 42 of the insulating rotating member 4, and the parallel vacuum arc-extinguishing chamber 3 is still maintained in the open state.

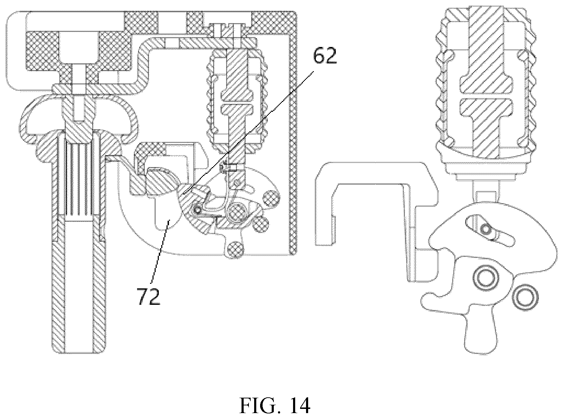

The moving contact continues to move upward, as shown in FIG. 14. The moving isolating contact contacts the fixed contact. After the second rotating conductor 62 is pushed by the lead-out conductor 72 to rotate a specific angle, the second rotating conductor 62 and the lead-out conductor 72 are about to separate. In addition, the second boss structure 732 of the insulating push-pull member 73 pushes the first rotating portion 42 of the insulating rotating member 4, the insulating rotating member 4 rotates clockwise, and the parallel vacuum arc-extinguishing chamber 3 starts to close.

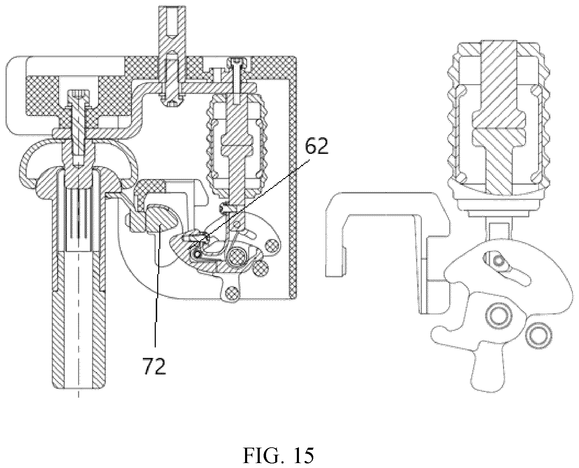

Finally, the moving contact moves upward, until the isolating switch is fully closed. As shown in FIG. 15, the second rotating conductor 62 is disengaged from the lead-out conductor 72, and rotates under the action of the reset torsion spring 63 to return to the state in the figure. The parallel vacuum arc-extinguishing chamber 3 remains closed under the action of a self-closing force.

The basic principle, main features and advantages of the present invention are indicated and described above.

Those skilled in the art should understand that the present invention is not limited by the above-mentioned embodiments. The above-mentioned embodiments and description only indicate the principle of the present invention. Any modifications and improvements made within the spirit and the scope of the present invention shall fall within the protection scope of the present invention. The protection scope of the present invention should be subject to the appended claims and any equivalent objects.

## Claims

1. A vacuum parallel switch device, comprising:
a main electrically-conductive loop, comprising an incoming line terminal bus, a bus connected to the incoming line terminal bus, a fixed isolating contact connected to an end of the bus, and a moving isolating contact assembly mating with the fixed isolating contact; and
a vacuum parallel loop, comprising the incoming line terminal bus, the bus connected to the incoming line terminal bus, and a parallel vacuum arc-extinguishing chamber connected to an other end of the bus, wherein a rotating conductor assembly is connected to a moving end of the parallel vacuum arc-extinguishing chamber through a flexible connection, and the moving end of the parallel vacuum arc-extinguishing chamber is connected to a lead-out conductor of the moving isolating contact assembly through the rotating conductor assembly;
the incoming line terminal bus, the bus, the fixed isolating contact, and the parallel vacuum arc-extinguishing chamber are all assembled on an insulating support member; and
two ends of a rotating support shaft are fixed to two side plates of the insulating support member, an insulating rotating member and the rotating conductor assembly are both supported by and rotatable around the rotating support shaft, and the insulating rotating member, the rotating support shaft, and the moving end of the parallel vacuum arc-extinguishing chamber cooperate by way of cam transmission. The insulating rotating member drives the moving end of the parallel vacuum arc-extinguishing chamber to implement opening or closing.

2. The vacuum parallel switch device according to claim 1, wherein the rotating conductor assembly integrally rotates counterclockwise around the rotating support shaft.

3. The vacuum parallel switch device according to claim 1, wherein a cam groove of the insulating rotating member, the rotating support shaft, and the moving end of the parallel vacuum arc-extinguishing chamber cooperate by way of cam transmission. The insulating rotating member drives the moving end of the parallel vacuum arc-extinguishing chamber to implement opening or closing.

4. The vacuum parallel switch device according to claim 3, wherein a front half of a cam groove is an unequal-diameter curved groove, and a rear half is an equal-arc groove.

5. The vacuum parallel switch device according to claim 1, wherein the rotating conductor assembly comprises a first rotating conductor and a second rotating conductor, and the first rotating conductor and the second rotating conductor rotate relative to each other around an internal first pin shaft and are limited by a torsion spring.

6. The vacuum parallel switch device according to claim 5, wherein a limiting pin shaft is arranged in a clockwise direction of the first rotating conductor.

7. The vacuum parallel switch device according to claim 1, wherein the moving isolating contact assembly comprises a conductive rod, an end portion of the conductive rod is provided with a shield, an insulating push-pull member is arranged below the shield, and the lead-out conductor is arranged below the insulating push-pull member.

8. The vacuum parallel switch device according to claim 7, wherein the insulating push-pull member comprises a first boss structure located at an upper end and a second boss structure located at a lower end, and the two boss structures are staggered with respect to each other in space and correspond to a first rotating portion and a second rotating portion of the insulating rotating member respectively.
